# EUROPEAN PATENT SPECIFICATION

(11) **EP 3 595 268 B1**
(45) Date of publication and mention of the grant of the patent: **24.11.2021**
(21) Application number: 18901803.9
(22) Date of filing: 14.06.2018
(51) Int. Cl.: H04L 29/08, H04L 29/06

(54) **STREAMING MEDIA RESOURCE DISTRIBUTION METHOD, SYSTEM, EDGE NODE AND CENTRAL DISPATCHING SYSTEM**
VERFAHREN ZUR VERTEILUNG VON STREAMING-MEDIENRESSOURCEN, SYSTEM, EDGE-KNOTEN UND ZENTRALES VERSANDSYSTEM
PROCÉDÉ DE DISTRIBUTION DE RESSOURCES MULTIMÉDIAS DE DIFFUSION EN CONTINU, SYSTÈME, NOEUD PÉRIPHÉRIQUE ET SYSTÈME DE DISTRIBUTION CENTRAL

(30) Priority: 14.05.2018 CN 201810456611
(43) Date of publication of application: 15.01.2020
(73) Proprietor: Wangsu Science & Technology Co., Ltd., Shanghai 200030 (CN)
(72) Inventor: DAI, Guocong, Xuhui District Shanghai 200030 (CN); CHEN, Jinxian, Xuhui District Shanghai 200030 (CN)
(74) Representative: de Arpe Fernandez, Manuel
(86) International application number: PCT/CN2018/091209
(87) International publication number: WO 2019/218416

(56) References cited:
- EP-A1- 2 028 804
- CN-A- 101 232 388
- CN-A- 104 660 700
- CN-A- 104 967 685
- CN-A- 104 980 417
- CN-A- 106 888 270
- US-A1- 2013 097 277
- US-A1- 2016 028 846

## Description

### TECHNICAL FIELD

The present disclosure relates to the field of Internet technologies and, in particular, to a method for distributing streaming media (at a pull stream edge node) according to claim 1, a pull stream edge node according to claim 5, a method for distributing streaming media (at a push stream edge node) according to claim 6, a push stream edge node according to claim 8, a method for distributing streaming media (at a central scheduling system) according to claim 9, a central scheduling system according to claim 12 and a system for distributing streaming media according to claim 13. Further embodiments are defined in the dependent claims.

### BACKGROUND

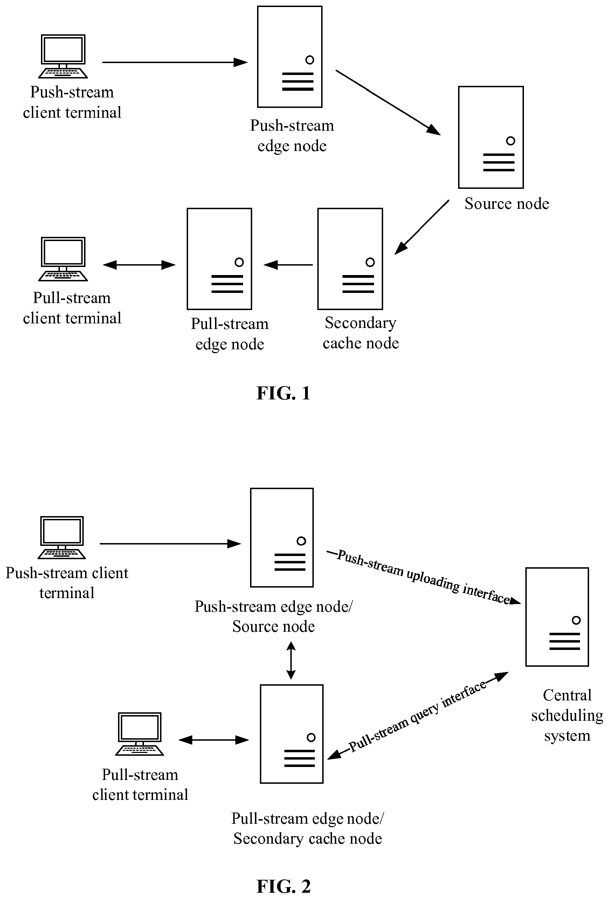

A current content delivery network (CDN) architecture usually includes a client terminal, an edge node, a source node, and a level 2 cache node. Referring to FIG. 1, in a live broadcast service, the client terminal may include a push-stream client terminal used by an anchor and a pull-stream client terminal used by a viewer, and the edge node may also include a push-stream edge node and a pull-stream edge node. When the push-stream client terminal needs to upload the live video, the push-stream edge node can receive the video stream pushed by the push-stream client terminal, and then the push-stream edge node can further push the video stream to a source node, so that the source node can store the video stream. Subsequently, when the stream client terminal needs to play the live video, the resource acquisition request may be sent to the pull-stream edge node, so that the pull-stream edge node can obtain the corresponding video stream from the source node. When the video stream is obtained, the source node forwards the video stream to the level 2 cache node first, and then the level 2 cache node sends the video stream to the pull-stream edge node. Finally, the pull-stream edge node can feed back the video stream to the pull-stream client terminal for displaying.

The document US 2016/028846 A1 discloses a method for managing a distributed data center. It discloses a residential caching system including a residential caching appliance and a social networking system.

The document EP 2028804 A1 discloses a method for playing streaming media based on a media delivery system. The media delivery system includes a media manager, a central server that support peer to peer technology, a request routing system, an edge server that support peer to peer technology, and multiple Peer to Peer clients.

In view of the above, a resource distribution process in the CDN architecture in existing technologies needs to forward resources between multiple nodes in the CDN, and has a long link path, which can increase the live broadcast delay and cause a huge network traffic consumption within the CDN.

### SUMMARY

The purpose of the present disclosure is to provide a distributing method, a system, an edge node, and a central scheduling system for a streaming media resource, which can reduce network traffic consumption within the CDN. The invention is described according to the claims.

It can be seen from the above that in the technical solution provided by the present disclosure the source node and the push-stream edge node are at equal level, and the level 2 cache node and the pull-stream edge node are at equal level, thereby avoiding a forwarding process of a large number of resources inside the CDN. Specifically, after receiving the push-stream request sent by the push-stream client terminal, the push-stream edge node may not push the corresponding streaming media resource to the source node, but stores the streaming media resource locally, and uploads a resource identifier of the streaming media resource and own node information of the push-stream edge node to the central scheduling system, to indicate that the streaming media resource is currently stored at the push-stream edge node. After receiving the resource acquisition request sent by the pull-stream client terminal, if the pull-stream edge node does not store the corresponding streaming media resource locally, the pull-stream edge node may send the pull-stream query request to the central scheduling system to obtain the node that currently stores the streaming media resource from the central scheduling system. If the central scheduling system feeds back the node information of the push-stream edge node to the pull-stream client terminal, the pull-stream edge node can directly obtain the corresponding streaming media resource from the push-stream edge node. In this way, the push-stream edge node undertakes both the service of edge node and the service of source node. In addition, after obtaining the required streaming media resource, the stream edge node can perform the storage of the obtained streaming media resource locally, and after the storage, upload the resource identifier and its own node information to the central scheduling system. In this way, if other stream edge nodes need to obtain the streaming media resource, the streaming media resource can be directly obtained from the pull-stream edge node where the streaming media resource is stored, so that the pull-stream edge node not only undertakes the service of the edge node and undertakes the service of the level 2 cache node at the same time. It can be seen that by making the push-stream edge node and the source node at equal level and making the pull-stream edge node and the level 2 cache node at equal level, the process of forwarding a large number of resources within the CDN can be avoided, thereby reducing the network traffic consumption inside the CDN, shortening the length of the resource transmission link and reducing the delay.

### DESCRIPTION OF THE DRAWINGS

In order to more clearly illustrate the technical solutions in embodiments of the present disclosure, the drawings used in the description of the embodiments are briefly described below.
FIG. 1 is a diagram of a system architecture of a CDN in existing technologies;
FIG. 2 is a diagram of a system for distributing a streaming media resource according to some embodiments of the present disclosure;
FIG. 3 is a flowchart of a method for distributing a streaming media resource implemented by a pull-stream edge node according to some embodiments of the present disclosure;
FIG. 4 is a structural diagram of a pull-stream edge node according to some embodiments of the present disclosure;
FIG. 5 is a flowchart of a method for distributing a streaming media resource implemented by a push-stream edge node according to some embodiments of the present disclosure; and
FIG. 6 is a flowchart of a method for distributing a streaming media resource implemented by a central scheduling system according to some embodiments of the present disclosure.

### DETAILED DESCRIPTION

The embodiments of the present disclosure are further described in detail below with reference to the accompanying drawings.

The present disclosure provides a system for distributing a streaming media resource. Referring to FIG. 2, the system includes a push-stream edge node, a pull-stream edge node, a level 2 cache node, a source node, and a central scheduling system. In the present embodiment, the push-stream edge node and the source node have the same configuration information, and the pull-stream edge node and the level 2 cache node have the same configuration information. The same configuration information may refer to that the hardware resources and software resources of the server in the node are consistent, and the domain names in the nodes are also consistent for the same streaming media resource. In this way, the push-stream edge node and the pull-stream edge node can undertake the service of the normal edge node, and at the same time, the push-stream edge node can also undertake the service of the source node, and the pull-stream edge node can also undertake the service of the level 2 cache node. As shown in FIG. 2, in the embodiment, the central scheduling system may provide a push-stream uploading interface, and the push-stream uploading interface may receive the push-stream information uploaded by the push-stream edge node. In addition, the central scheduling system may further provide a pull-stream query interface, where the pull-stream query interface may receive a pull-stream query request sent by the pull-stream edge node, and feedback the corresponding query result to the pull-stream edge node.

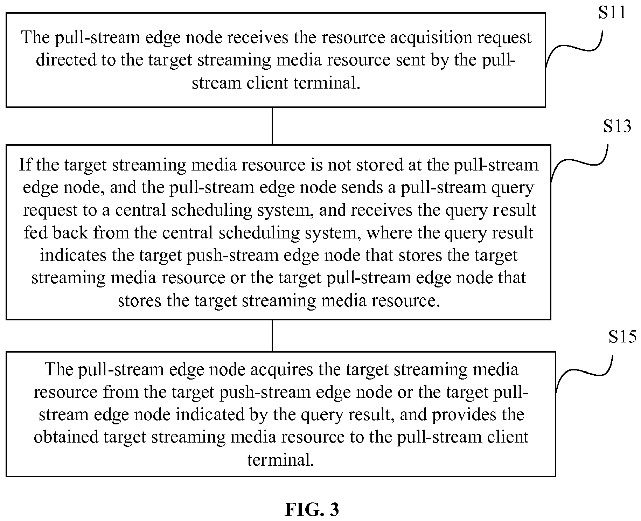

Specifically, referring to FIG. 3, the present disclosure provides a method for distributing a streaming media resource, where the execution subject of the method is the foregoing pull-stream edge node. As shown in FIG. 3, the method includes the following steps.

S11: The pull-stream edge node receives the resource acquisition request that directs to the target streaming media resource and is sent by the pull-stream client terminal.

In this embodiment, the pull-stream client terminal may be a terminal device used by a user who views an on-demand video or a live video. Of course, the pull-stream client terminal may also be software run by the terminal device. For example, the pull-stream client terminal may be a smart phone, or may be a software such as Youku TV, Tencent Video, and DouYu live TV, etc., run by a smart phone. When the user wants to view the target streaming media resource, the pull-stream client terminal can send a resource acquisition request that directs to the target streaming media resource. The request can be received by a pull-stream edge node in the CDN. The pull-stream edge node may be an edge node with the best communication condition with the pull-stream client terminal, or may be an edge node selected according to a load balancing policy, which is not limited in this disclosure.

In this embodiment, the resource acquisition request usually includes a resource identifier of the target streaming media resource, and the resource identifier may be a uniform resource locator (URL) used to locate the target streaming media resource, and may also be a name of the target streaming media resource, or of course, a combination of the foregoing URL and name. In addition, the resource acquisition request may further include a communication address of the pull-stream client terminal, so that the target streaming media resource may be fed back to the pull-stream client terminal according to the communication address.

S13: If the target streaming media resource is not stored at the pull-stream edge node, and the pull-stream edge node sends a pull-stream query request to a central scheduling system, and receives the query result fed back from the central scheduling system, where the query result indicates the target push-stream edge node that stores the target streaming media resource or the target pull-stream edge node that stores the target streaming media resource.

In this embodiment, after receiving the resource acquisition request, the pull-stream edge node first determines whether the corresponding target streaming media resource is stored locally according to the resource identifier carried in the resource acquisition request. If the target streaming media resource has been stored, the target streaming media resource can be directly fed back to the pull-stream client terminal. If the target streaming media resource is not stored at the pull-stream edge node, the pull-stream query request can be sent to the central scheduling system through the pull-stream query interface provided by the central scheduling system.

In this embodiment, the pull-stream query request may include a resource identifier of the target streaming media resource and node information of the pull-stream edge node. The resource identifier of the target streaming media resource is configured to notify the central scheduling system, which streaming media resource the current user wants to view. The node information of the pull-stream edge node may include information such as a name, an IP address, and an area of the edge node of the pull-stream. The central scheduling system may determine, according to the node information, a node having an optimal communication condition with the pull-stream edge node among the plurality of nodes that store the target streaming media resource.

In this embodiment, after receiving the pull-stream query request, the central scheduling system may query the pull-stream edge node and/or the push-stream edge node that currently store the target streaming media resource according to the resource identifier carrier in the pull-stream query request. It should be noted that, since the push-stream edge node and the source node are at equal level, the streaming media resource can be stored in the push-stream edge node; in addition, since the pull-stream edge node and the level 2 cache node are at equal level, the streaming media resource can also be stored in the pull-stream edge node. In the central scheduling system, information of a streaming media resource that has been currently stored in the CDN may be recorded, and the information may include a resource identifier of the streaming media resource, and node information of a node that stores the streaming media resource. In this way, the central scheduling system can may query the pull-stream edge node and/or the push-stream edge node that currently store the target streaming media resource according to the resource identifier carrier in the pull-stream query request.

In this embodiment, if the number of nodes that store the target streaming media resource obtained by the query is more than one, the central scheduling system may follow an optimal path principle, and determine that the target pull-stream edge node or the target push-stream edge node that matches the pull-stream edge node that sends the pull-stream query request, according to the pull-stream edge node and/or the push-stream edge node obtained by the query. Specifically, the central scheduling system may determine a communication condition between the pull-stream edge node that sends the pull-stream query request and each node that is obtained by the query, and the communication condition may include various information such as a communication delay, a packet loss rate, and a bandwidth consumption, etc. Then, the node with the best communication condition can be used as the target pull-stream edge node or the target determined target pull-stream edge node or the target push-stream edge node and the pull-stream edge node that sends the pull-stream query request forms an optimal transmission path.

In this embodiment, the central scheduling system may feed back the node information of the determined target pull-stream edge node or the node information of the determined target push-stream edge node to the pull-stream edge node that sends the pull-stream query request. The feedback node information may include an IP address of the target pull-stream edge node or the target push-stream edge node.

S15: The pull-stream edge node acquires the target streaming media resource from the target push-stream edge node, or the target pull-stream edge node determined by the query result, and provides the obtained target streaming media resource to the pull-stream client terminal.

In this embodiment, the pull-stream edge node may obtain the target streaming media resource from the corresponding target pull-stream edge node or the target push-stream edge node according to the node information fed back by the central scheduling system. After the target streaming media resource is obtained, the pull-stream edge node may provide the target streaming media resource to the pull-stream client terminal.

In this embodiment, since the pull-stream edge node and the level 2 cache node are at equal level, after the pull-stream edge node acquires the target streaming media resource, the pull-stream edge node may store the target streaming media resources locally. If later a new stream edge node wants to obtain the target streaming media resource, the pull-stream edge node that stores the target streaming media resource can be used as a level 2 cache node to provide the target steaming media resource to a new pull-stream edge node. After the target streaming media resource is stored locally, the pull-stream edge node may feed back the resource identifier of the target streaming media resource and the node information of the pull-stream edge node itself to the central scheduling system, so that the central scheduling system records the node information of the node that currently stores the target streaming media resource.

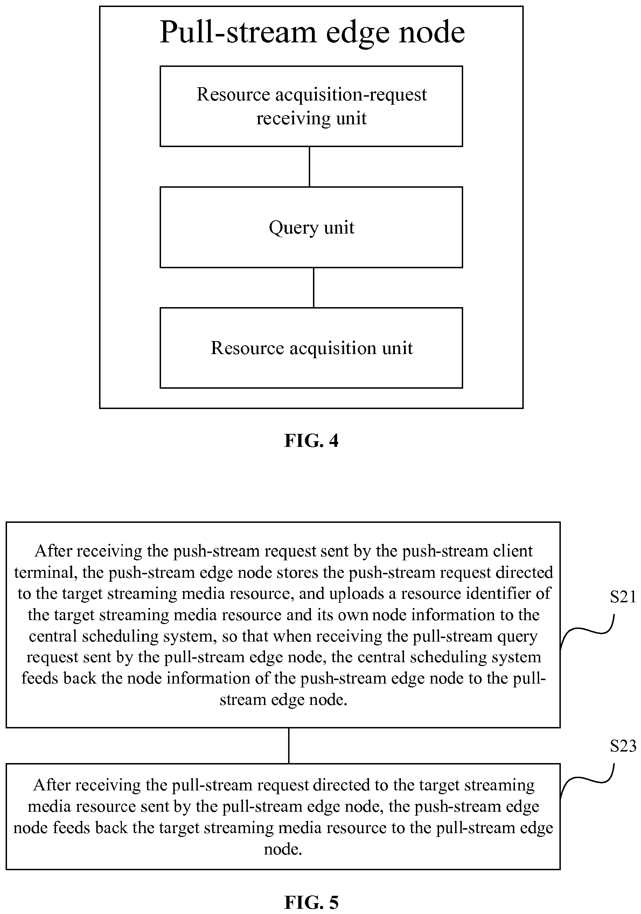

Referring to FIG. 4, the present disclosure further provides a pull-stream edge node, where the pull-stream edge node includes:
a resource acquisition-request receiving unit, configured to receive a resource acquisition request that directs to the target streaming media resource and is sent by the pull-stream client terminal;
a query unit, configured to send a pull-stream query request to the central scheduling system if the target streaming media resource is not stored at the pull-stream edge node, and receive the query result fed back from the central scheduling system, where the query result indicates the target push-stream edge node that stores the target streaming media resource or the target pull-stream edge node that stores the target streaming media resource; and
a resource acquisition unit, configured to obtain the target streaming media resource from the target push-stream edge node, or the target pull-stream edge node determined by the query result.

For the specific functions implemented by the edge node of the pull-stream, reference can be made to the method for distributing the streaming media resources performed by the edge node of the pull-stream, and details are not described herein.

The disclosure further provides a method for distributing a streaming media resource, and the execution subject of the method is the foregoing push-stream edge node. Referring to FIG. 5, the method includes the following steps.

S21: After receiving the push-stream request sent by the push-stream client terminal, the push-stream edge node stores the push-stream request that directs to the target streaming media resource, and uploads a resource identifier of the streaming media resource and its own node information to the central scheduling system, so that when receiving the pull-stream query request sent by the pull-stream edge node, the central scheduling system feeds back the node information of the push-stream edge node to the pull-stream edge node.

In this embodiment, the push-stream client terminal may be a terminal device used by a user to upload a streaming media resource, or software installed in the terminal device. The user who uploads the streaming media resource may be, for example, an anchor of a live broadcast platform. The terminal device may be, for example, a desktop computer or a smart phone, and the software may be, for example, an application (APP) such as Acfun, Bilibili, Huya broadcasting. When the push-stream client terminal needs to upload the streaming media resource, the push-stream request that directs to the streaming media resource may be sent out, where the push-stream request may include the resource identifier of the streaming media resource. The push-stream request can be received by a push-stream edge node in the CDN. The push-stream edge node may be an edge node having the best communication condition with the push-stream client terminal or may be an edge node selected according to the load balancing policy, which is not limited in this disclosure.

In this embodiment, after the push-stream edge node receives the push-stream request, the streaming media resource directed to by the push-stream request may be locally stored, and the streaming media resource may not be continued to be pushed to the source node, thereby avoiding bandwidth consumption inside the CDN. After the streaming media resource is stored, the push-stream edge node may upload the resource identifier of the streaming media resource and its own node information to the central scheduling system. The resource identifier may be a URL for locating the streaming media resource or may be a name of the streaming media resource, and of course, a combination of the foregoing URL and a name may also be used. The node information of the push-stream edge node may include information such as a name, an IP address, and an area of the push-stream edge node, etc. In this way, the central scheduling system can store the received resource identifier and node information in association. If the pull-stream edge node sends a pull-stream query request that directs to the streaming media resource, the central scheduling system may feed back the node information of the push-stream edge node to the pull-stream edge node, so that the pull-stream edge node can obtain the streaming media resource from the push-stream edge node.

S23: After receiving the pull-stream request that directs to the target streaming media resource and is sent by the pull-stream edge node, the push-stream edge node feeds back the streaming media resource to the pull-stream edge node.

In this embodiment, when the pull-stream edge node receives the resource acquisition request sent by the pull-stream client terminal, if the pull-stream edge node does not cache the corresponding streaming media resource, the pull-stream edge node may follow description in step S13 and send a pull-stream query request to the central scheduling system, so as to obtain node information of the push-stream edge node corresponding to the resource acquisition request from the central scheduling system. If the node information characterizes the push-stream edge node in step S21, the push-stream edge node may receive the pull-stream request that is sent by the pull-stream edge node and directs to the streaming media resource and may feed back the streaming media resource to the pull-stream edge node. It can be seen that, after receiving the push-stream request, the push-stream edge node in the embodiment does not continue to push the corresponding streaming media resource to the source node, but stores the streaming media resource locally, and uploads the resource identifier and own node information of the push-stream edge node to the central scheduling system, so that the push-stream edge node not only undertakes the service of the edge node but also realizes the service of the source node.

The disclosure also provides a push-stream edge node, where the push-stream edge node includes:
an information uploading unit, configured to after the push-stream edge node receiving the push-stream request sent from the push-stream client terminal, store the streaming media resource directed to by the push-stream request and upload the resource identifier of the streaming media resource and the node information of the push-stream edge node to the central scheduling system, so that when receiving the pull-stream query request sent by the pull-stream edge node, the central scheduling system feeds back the node information of the push-stream edge node to the pull-stream edge node; and
a resource feedback unit, configured to after receiving the pull-stream request that directs to the streaming media resource and is sent by the pull-stream edge node, feed back the streaming media resource to the pull-stream edge node.

For the specific functions implemented by the push-stream edge node, reference can be made to the method for distributing the streaming media resource performed by the push-stream edge node, which will not be described here.

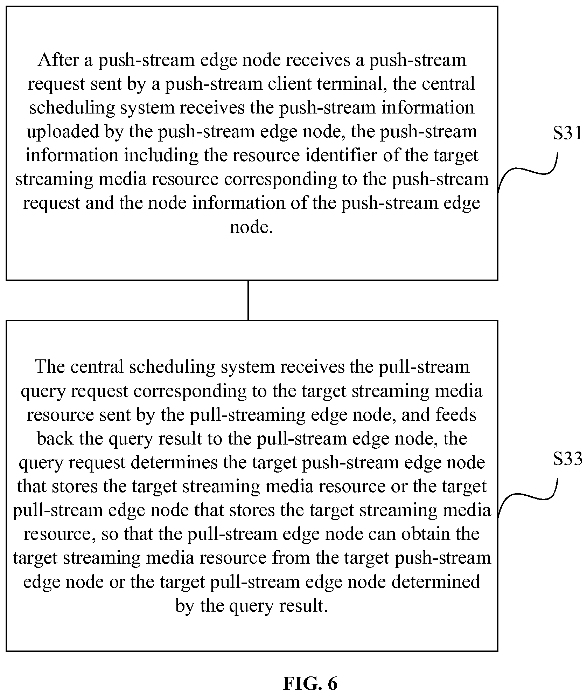

Referring to FIG. 6, the present disclosure further provides a method for distributing a streaming media resource, where the execution subject of the method is the central scheduling system described above, and the method includes the following steps.

S31: after a push-stream edge node receives a push-stream request sent by a push-stream client terminal, the central scheduling system receives the push-stream information uploaded by the push-stream edge node, the push-stream information including the resource identifier of the streaming media resource directed to by the push-stream request and the node information of the push-stream edge node.

In this embodiment, when the push-stream client terminal needs to upload the streaming media resource, the push-stream request that directs to the streaming media resource may be sent out, where the push-stream request may include the resource identifier of the streaming media resource. The push-stream request can be received by the push-stream edge node in the CDN. After receiving the push-stream request, the push-stream edge node may locally store the streaming media resource directed to by the push-stream request without continuing to push the streaming media resource to the source node, thereby avoiding bandwidth consumption inside the CDN. After the streaming media resource is stored, the push-stream edge node may upload the resource identifier of the streaming media resource and its own node information as push-stream information to the central scheduling system. In this way, the central scheduling system can store the received resource identifier and node information in association.

S33: the central scheduling system receives the pull-stream query request that directs to the target streaming media resource and is sent by the pull-stream edge node, and feeds back the query result to the pull-stream edge node, the query request determines the target push-stream edge node that stores the target streaming media resource or the target pull-stream edge node that stores the target streaming media resource, so that the pull-stream edge node can obtain the target streaming media resource from the target push-stream edge node or the target pull-stream edge node indicated by the query result.

In this embodiment, when the user wants to view the target streaming media resource, the pull-stream client terminal may send a resource acquisition request that directs to the target stream resource to the pull-stream edge node. In this embodiment, after receiving the resource acquisition request, the pull-stream edge node first determines whether the corresponding target streaming media resource is stored locally according to the resource identifier carried in the resource acquisition request. If the target streaming media resource has been stored, the target streaming media resource can be directly fed back to the pull-stream client terminal. If the target streaming media resource is not stored at the edge node, a pull-stream query request may be sent to the central scheduling system through the pull-stream query interface provided by the central scheduling system.

In this embodiment, the pull-stream query request may include a resource identifier of the target streaming media resource and node information of the pull-stream edge node. The resource identifier of the target streaming media resource is configured to notify the central scheduling system, which streaming media resource the current user wants to view. The node information of the pull-stream edge node may include information such as a name, an IP address, and an area of the edge node of the pull-stream. The central scheduling system may determine, according to the node information, a node having an optimal communication condition with the pull-stream edge node among the plurality of nodes that store the target streaming media resource.

In this embodiment, after receiving the pull-stream query request, the central scheduling system may query the pull-stream edge node and/or the push-stream edge node that currently store the target streaming media resource according to the resource identifier carrier in the pull-stream query request. It should be noted that, since the push-stream edge node and the source node are at equal level, the streaming media resource can be stored in the push-stream edge node; in addition, since the pull-stream edge node and the level 2 cache node are at equal level, the streaming media resource can also be stored in the pull-stream edge node. In the central scheduling system, information of a streaming media resource that has been currently stored in the CDN may be recorded, and the information may include a resource identifier of the streaming media resource, and node information of a node that stores the streaming media resource. In this way, the central scheduling system can may query the pull-stream edge node and/or the push-stream edge node that currently store the target streaming media resource according to the resource identifier carrier in the pull-stream query request.

In this embodiment, if the number of nodes that store the target streaming media resource obtained by the query is more than one, the central scheduling system may follow an optimal path principle, and determine that the target pull-stream edge node or the target push-stream edge node that matches the pull-stream edge node that sends the pull-stream query request, according to the pull-stream edge node and/or the push-stream edge node obtained by the query. Specifically, the central scheduling system may determine a communication condition between the pull-stream edge node that sends the pull-stream query request and each node that is obtained by the query, and the communication condition may include various information such as a communication delay, a packet loss rate, and a bandwidth consumption, etc. Then, the node with the best communication condition can be used as the target pull-stream edge node or the target push-stream edge node that matches the pull-stream edge node that sends the pull-stream query request. In this way, the determined target pull-stream edge node or the target push-stream edge node and the pull-stream edge node that sends the pull-stream query request may form an optimal transmission path.

In this embodiment, the central scheduling system may feed back the node information of the determined target pull-stream edge node or the node information of the determined target push-stream edge node to the pull-stream edge node that sends the pull-stream query request. The feedback node information may include an IP address of the target pull-stream edge node or the target push-stream edge node.

In this embodiment, the pull-stream edge node may obtain the target streaming media resource from the corresponding target pull-stream edge node or the target push-stream edge node according to the node information fed back by the central scheduling system. After the target streaming media resource is obtained, the pull-stream edge node may provide the target streaming media resource to the pull-stream client terminal.

In this embodiment, since the pull-stream edge node and the level 2 cache node are at equal level, after the pull-stream edge node acquires the target streaming media resource, the pull-stream edge node may store the target streaming media resources locally. If later a new stream edge node wants to obtain the target streaming media resource, the pull-stream edge node that stores the target streaming media resource can be used as a level 2 cache node to provide the target steaming media resource to a new pull-stream edge node. After the target streaming media resource is stored locally, the pull-stream edge node may feed back the resource identifier of the target streaming media resource and the node information of the pull-stream edge node itself to the central scheduling system, so that the central scheduling system records the node information of the node that currently stores the target streaming media resource.

The disclosure also provides a central scheduling system, the system comprising:
a push-stream information receiving unit, configured to after the push-stream edge node receives the push-stream request sent by the push-stream client terminal, receive the push-stream information uploaded by the push-stream edge node, where the push-stream information includes a resource identifier of the streaming media resource directed to by the push-stream request and node information of the push-stream edge node; and
a query result feedback unit, configured to receive the pull-stream query request that directs to the target streaming media resource and is sent by the pull-stream edge node, and feed back the query result to the pull-stream edge node, the query request determines the target push-stream edge node that stores the target streaming media resource or the target pull-stream edge node that stores the target streaming media resource, so that the pull-stream edge node can obtain the target streaming media resource from the target push-stream edge node or the target pull-stream edge node represented by the query result.

For the specific functions implemented by the central scheduling system, reference can be made to the method for distributing the streaming media resources executed by the central scheduling system, and details are not described herein.

Referring to FIG. 2, the present disclosure further provides a distribution system for streaming media resources, where the system includes a push-stream edge node, a pull-stream edge node, a level 2 cache node, a source node, and a central scheduling system, where:
the push-stream edge node and the source node have the same configuration information, and the pull-stream edge node and the level 2 cache node have the same configuration information; and
the push-stream edge node, the pull-stream edge node, and the central scheduling system are respectively used to execute the corresponding method steps and are not described herein again.

It can be seen from the above that in the technical solution provided by the present disclosure the source node and the push-stream edge node are at equal level, and the level 2 cache node and the pull-stream edge node are at equal level, thereby avoiding a forwarding process of a large number of resources inside the CDN. Specifically, after receiving the push-stream request sent by the push-stream client terminal, the push-stream edge node may not push the corresponding streaming media resource to the source node, but stores the streaming media resource locally, and uploads the resource identifier of the streaming media resource and its own node information to the central scheduling system, to indicate that the streaming media resource is currently stored at the push-stream edge node. After receiving the resource acquisition request sent by the pull-stream client terminal, if the pull-stream edge node does not store the corresponding streaming media resource locally, the pull-stream edge node may send the pull-stream query request to the central scheduling system to obtain the node that currently stores the streaming media resource from the central scheduling system. If the central scheduling system feeds back the node information of the push-stream edge node to the pull-stream client terminal, the pull-stream edge node can directly obtain the corresponding streaming media resource from the push-stream edge node. In this way, the push-stream edge node undertakes both the service of edge node and the service of source node. In addition, after obtaining the required streaming media resource, the stream edge node can perform the storage of the obtained streaming media resource locally, and after the storage, upload the resource identifier and its own node information to the central scheduling system. In this way, if other stream edge nodes need to obtain the streaming media resource, the streaming media resource can be directly obtained from the stream edge node where the streaming media resource is stored, so that the stream edge node not only undertakes the service of the edge node and undertakes the service of the level 2 cache node at the same time. It can be seen that by making the push-stream edge node and the source node at equal level and making the pull-stream edge node and the level 2 cache node at equal level, the process of a large number of resources within the CDN can be avoided, thereby reducing the network traffic consumption inside the CDN.

Through the description of the above embodiments, those skilled in the art can clearly understand that the various embodiments can be implemented by means of software and a necessary general hardware platform, and of course, can also be implemented by hardware. Based on such understanding, the above-described technical solutions may be embodied in the form of software products in essence or in the form of software products, which may be stored in a computer readable storage medium such as ROM/RAM, magnetic discs, optical discs, etc., which include instructions for causing a computer device (which may be a personal computer, server, or network device, etc.) to perform the methods described in various embodiments or portions of the embodiments.

The invention is defined by a method for distributing streaming media (at a pull stream edge node) according to claim 1, a pull stream edge node according to claim 5, a method for distributing streaming media (at a push stream edge node) according to claim 6, a push stream edge node according to claim 8, a method for distributing streaming media (at a central scheduling system) according to claim 9, a central scheduling system according to claim 12 and a system for distributing streaming media according to claim 13. Further embodiments are defined in the dependent claims.

## Claims

1. A method for distributing a streaming media resource in a content delivery network, CDN, comprising:
receiving (S11), by a pull-stream edge node, a resource acquisition request directed to a target streaming media resource sent by a pull-stream client terminal;
determining, by the pull-stream edge node, whether the target streaming media resource is stored locally according to a resource identifier carried in the resource acquisition request after receiving the resource acquisition request;
sending (S13), by the pull-stream edge node, a pull-stream query request to a central scheduling system if the target streaming media resource is un-stored at the pull-stream edge node, and receiving a query result fed back by the central scheduling system, wherein the query result indicates a target push-stream edge node that stores the target streaming media resource, and an optimal transmission path is formed between the target push-stream edge node and the pull-stream edge node; and
obtaining (S15), by the pull-stream edge node, the target streaming media resource from the target push-stream edge node indicated by the query result directly, and providing the obtained target streaming media resource to the pull-stream client terminal.

2. The method according to claim 1, further comprising:
feeding back, if the target streaming media resource is stored at the pull-stream edge node, the target streaming media resource to the pull-stream client terminal.

3. The method according to claim 1, wherein when the pull-stream edge node obtains the target streaming media resource, the method further comprises:
storing locally, by the pull-stream edge node, the target streaming media resource, and feeding back a resource identifier of the target streaming media resource and node information of the pull-stream edge node to the central scheduling system.

4. The method according to claim 1, wherein the resource acquisition request includes a resource identifier of the target streaming media resource; the pull-stream query request includes the resource identifier of the target streaming media resource and node information of the pull-stream edge node.

5. A pull-stream edge node, **characterized in that**, the pull-stream edge node comprises:
a resource acquisition-request receiving unit, configured to receive a resource acquisition request that directs to a target streaming media resource and is sent by a pull-stream client terminal;
a query unit, configured to send a pull-stream query request to a central scheduling system if the target streaming media resource is not stored at the pull-stream edge node, and receive a query result fed back from the central scheduling system; wherein the query result indicates a target push-stream edge node that stores the target streaming media resource, and an optimal transmission path is formed between the target push-stream edge node and the pull-stream edge node; and
a resource acquisition unit, configured to directly obtain the target streaming media resource from the target push-stream edge node indicated by the query result,
wherein the pull-stream edge node is further configured to determine whether the target streaming media resource is stored locally according to a resource identifier carried in the resource acquisition request after the resource acquisition-request receiving unit receives the resource acquisition request.

6. A method for distributing a streaming media resource in a content delivery network, CDN, comprising:
storing (S21), by a push-stream edge node, when receiving a push-stream request sent by a push-stream client terminal, the streaming media resource directed to by the push-stream request, and uploading a resource identifier of the streaming media resource and own node information of the push-stream edge node to a central scheduling system after storing the streaming media resource, so that when receiving a pull-stream query request sent by a pull-stream edge node after the pull-stream edge node receives a resource acquisition request for a target streaming media resource from a pull-stream client terminal and determines that the target streaming media resource is un-stored locally according to a resource identifier carried in the resource acquisition request, the central scheduling system feeds back the node information of the push-stream edge node to the pull-stream edge node, wherein an optimal transmission path is formed between the push-stream edge node and the pull-stream edge node; and
feeding back (S23), by the push-stream edge node, after receiving the pull-stream request that directs to the streaming media resource and is sent by the pull-stream edge node, the streaming media resource to the pull-stream edge node directly.

7. The method according to claim 6, wherein the pull-stream edge node is configured to receive a resource acquisition request sent by a pull-stream client terminal, and obtain node information of a push-stream edge node corresponding to the resource acquisition request from the central scheduling system.

8. A push-stream edge node, **characterized in that**, the push-stream edge node comprises:
an information uploading unit, configured to after the push-stream edge node receiving a push-stream request sent from a push-stream client terminal, store a streaming media resource directed to by the push-stream request, and upload a resource identifier of the streaming media resource and node information of the push-stream edge node to a central scheduling system, so that when receiving a pull-stream query request sent by a pull-stream edge node after the pull-stream edge node receives a resource acquisition request for a target streaming media resource from a pull-stream client terminal and determines that the target streaming media resource is un-stored locally according to a resource identifier carried in the resource acquisition request, the central scheduling system feeds back the node information of the push-stream edge node to the pull-stream edge node; and
a resource feedback unit, configured to after receiving the pull-stream request that directs to the streaming media resource and is sent by the pull-stream edge node, directly feed back the streaming media resource to the pull-stream edge node,
wherein an optimal transmission path is formed between the push-stream edge node and the pull-stream edge node.

9. A method for distributing a streaming media resource in a content delivery network, CDN, comprising:
receiving (S31), by a central scheduling system, when a push-stream edge node receives a push-stream request sent by a push-stream client terminal, push-stream information uploaded by the push-stream edge node, the push-stream information including a resource identifier of the streaming media resource directed to by the push-stream request and node information of the push-stream edge node; and
receiving (S33), by the central scheduling system, a pull-stream query request that directs to a target streaming media resource and is sent by a pull-stream edge node after the pull-stream edge node receives a resource acquisition request for a target streaming media resource from a pull-stream client terminal and determines that the target streaming media resource is un-stored locally according to a resource identifier carried in the resource acquisition request, and feeding back a query result to the pull-stream edge node, wherein the query result indicates a target push-stream edge node that stores the target streaming media resource, and between which and the pull-stream edge node an optimal transmission path is formed, so that the pull-stream edge node directly obtains the target streaming media resource from the target push-stream edge node indicated by the query result.

10. The method according to claim 9, further comprising:
receiving and storing locally, by the central scheduling system, when the pull-stream edge node stores the target streaming media resource, a resource identifier of the target streaming media resource and node information of the pull-stream edge node sent by the pull-stream edge node.

11. The method according to claim 9, wherein the central scheduling system feeding back the query result to the pull-stream edge node comprises:
querying, by the central scheduling system, push-stream edge nodes that currently store the target streaming media resource, and determining a target push-stream edge node matching with the pull-stream edge node that sends the pull-stream query request among the push-stream edge nodes determined based on the query result; and
feeding back, by the central scheduling system, node information of the determined target push-stream edge node to the pull-stream edge node that sends the pull-stream query request.

12. A central scheduling system, **characterized in that**, the system comprises:
a push-stream information receiving unit, configured to after a push-stream edge node receives a push-stream request sent by a push-stream client terminal, and receive push-stream information uploaded by the push-stream edge node, wherein the push-stream information includes a resource identifier of a streaming media resource directed to by the push-stream request and node information of the push-stream edge node; and
a query result feedback unit, configured to receive a pull-stream query request that directs to a target streaming media resource and is sent by a pull-stream edge node after the pull-stream edge node receives a resource acquisition request for a target streaming media resource from a pull-stream client terminal and determines that the target streaming media resource is un-stored locally according to a resource identifier carried in the resource acquisition request, and feed back a query result to the pull-stream edge node, wherein the query result indicates a target push-stream edge node that stores the target streaming media resource, and between which and the pull-stream edge node an optimal transmission path is formed, so that the pull-stream edge node directly obtains the target streaming media resource from the target push-stream edge node indicated by the query result.

13. A system for distributing a streaming media resource in a content delivery network, CDN, **characterized in that**, that the system comprises a push-stream edge node, a pull-stream edge node, a level 2 cache node, a source node, and a central scheduling system, wherein:
the push-stream edge node and the source node have same configuration information, and the pull-stream edge node and the level 2 cache node have same configuration information;
the push-stream edge node is configured to perform the steps of claim 6 or 7;
the pull-stream edge node is configured to perform the steps of any one of claims 1 to 4; and
the central scheduling system is configured to perform the steps of any of claims 9-11.

## Patentansprüche

1. Eine Methode für die Verteilung einer Streamingmedien-Ressource in einem Inhaltsbelieferungsnetzwerk, CDN, die Folgendes umfasst:
Empfang (S11) durch einen Pullstream-Randknoten einer Ressourcen-Erwerbsanforderung, die an eine Ziel-Streamingmedien-Ressource gerichtet ist,
die durch ein Pullstream-Kundenterminal gesandt wurde;
Feststellung durch den Pullstream-Randknoten, ob die Ziel-Streamingmedien-Ressource lokal übereinstimmend mit einem in der Ressourcen-Erwerbsanforderung übemittelten Ressourcenbezeichner nach Empfang der Ressourcen-Erwerbsanforderung gespeichert ist;
Senden (S13) durch den Pullstream-Randknoten einer Pullstream-Abfrageanforderung an ein zentrales Planungssystem, wenn die Ziel-Streamingmedien-Ressource nicht bei dem Pullstream-Randknoten gespeichert ist, und Empfang eines Abfrageergebnisses, das durch das zentrale Planungssystem rückgemeldet wurde, wobei das Abfrageergebnis einen Ziel-Pushstream-Randknoten angibt, der die Ziel-Streamingmedien-Ressource speichert, und sich zwischen dem Ziel-Pushstream-Randknoten und dem Pullstream-Randknoten ein optimaler Übertragungsweg bildet; und
Erhalt (S15) durch den Pullstream-Randknoten der Ziel-Pullstreammedin-Ressource von dem direkt durch das Abfrageergebnis angegebenen Ziel-Pullstream-Randknoten, und Bereitstellung der erhaltenen Ziel-Pullstreammedien-Ressource an das Pullstreamkundenterminal.

2. Die Methode gemäss Anspruch 1, die weiter Folgendes umfasst:
Wenn die Ziel-Streamingmedienressource an dem Pullstream-Randknoten gespeichert ist, Rückmeldung der Ziel-Streamingmedienressource an das Pullstreamkundenterminal.

3. Die Methode gemäss Anspruch 1, bei der, wenn der Pullstream-Randknoten die Ziel-Streamingmedienressource erhält, die Methode weiter Folgendes umfasst:
Lokales Speichern durch den Pullstream-Randknoten der Ziel-Streamingmemdienressource und Rückmeldung eines Ressourcenbezeichners der Ziel-Streamingmedienressource und Knoteninformation des Pullstream-Randknotens an das zentrale Planungssystem.

4. Die Methode gemäss Anspruch 1, bei der die Ressourcen-Erwerbsanforderung einen Ressourcenbezeichner der Ziel-Streamingmedienressource einschliesst; die Pullstream-Abfrageanforderung den Ressourcenbezeichner des Ziel-Streamingmedienressource und Knoteninformation des Pullstream-Randknotens einschliesst.

5. Ein Pullstream-Randknoten **dadurch gekennzeichnet, dass** der Pullstream-Randknoten Folgendes umfasst:
Eine Einheit für den Empfang der Ressourcen-Erwerbsanforderung, die konfiguriert ist, um eine Ressourcen-Erwerbsanforderung zu empfangen, die zu einer Ziel-Streamingmedienressource führt und durch ein Pullstream-Kundenterminal gesandt wird;
eine Abfrageeinheit, die konfiguriert ist, um eine Pullstream-Abfrageanforderung an ein zentrales Planungssysten zu senden, wenn die Ziel-Streamingmedienressource nicht im Pullstream-Randkonten gespeichert ist,
und um eine Abfrageergebnisrückmeldung vom zentralen Planungssystem zu empfangen, wobei das Abfrageergebnis einen Ziel-Pushstream-Randknoten angibt, der die Ziel-Streamingmedienressource speichert, und wobei ein optimaler Übertragungsweg zwischen dem Ziel-Pushstream-Randknoten und dem Pullstream-Randknoten gebildet wird; und
eine Ressourcenerwerbseinheit, die konfiguriert ist, um direkt die Ziel-Streamingmedienressource von dem durch das Abfrageergebnis angegebenen Ziel-Pushstream-Randknoten zu empfangen,
wobei der Pullstream-Randkonten weiter konfiguriert ist, um festzustellen, ob die Ziel-Streamingmedienressoure lokal übereinstimmend mit einem Ressourcenbezeichner gespeichert ist, der mit der Ressourcenerwerbsanforderung übetragen wird, nachdem die Empfangseinheit für die Ressourcenerwerbsanforderung die Ressourcenerwerbsanforderung erhält.

6. Eine Methode für die Verteilung einer Streamingmedienressource in einem Inhaltsbelieferungsnetzwerk, CDN, die Folgendes umfasst:
Speichern (S21) durch einen Pushstream-Randknoten, bei Empfang einer durch ein Pushstream-Kundenterminal gesandten Pushstream-Anforderung, der durch die Pushstream-Anforderung angefragten Streamingmedienresource, und Hochladen eines Ressourcenbezeichners der Streamingmedienressource und eigener Konteninformation des Pushstream-Randknotens an ein zentrales Planungssystem nach Speichern der Streamingmedienressource, so dass bei Empfang einer durch einen Pullstream-Randknoten gesandten Pullstream-Abfrageanforderung, nachdem der Pullstream-Randknoten eine Ressourcenerwerbsanforderung für eine Ziel-Streamingmedien- Ressource von einem Pullstream-Kundenterminal empfangen hat und festgestellt hat, dass die Ziel-Streamingmedienressource lokal nicht gespeichert ist übereinstimmend mit einem mit der Ressourcenerwerbsanforderung übertragenen Ressourcenbezeichner, das zentrale Planungssystem die Konteninformation des Pushstream-Randknotens an den Pullstream-Randknoten rückmeldet,
wobei ein optimaler Übertragungsweg zwischen dem Pushstream-Randknoten und dem Pullstream-Randknoten gebildet wird; und
direkte Rückmeldung (S23) der Streamingmedienressource an den Pullstream-Randknoten, durch den Pushstream-Randknoten nach Empfang der Pullstreamanforderung, die sich an die Streamingmedienressource richtet und die durch den Pullstream-Randknoten gesandt wurde.

7. Die Methode gemäss Anspruch 6, bei der der Pullstream-Randknoten konfiguriert ist, um eine durch ein Pullstream-Kundenterminal gesandte Ressourcenerwerbsanforderung zu empfangen und Knoteninformation von einem, der Ressourcenerwerbsanforderung vom zentralen Planungssystem entsprechenden Pushstream-Randknoten zu erhalten.

8. Ein Pushstream-Randknoten **dadurch gekennzeichnet, dass** der Pushstream-Randknoten Folgendes umfasst:
Eine Informationshochladungseinheit, die konfiguriert ist, um nach Empfang durch den Pushstream-Randknoten einer von Pushstream-Kundenterminal gesandten Pushstream-Anforderung eine Streamingmedienressource zu speichern, an die die Pushstream-Anforderung gerichtet ist, und einen Ressourcenbezeichner der Streamingmedienressorce und Knoteninformation des Pushstream-Randknotens an ein zentrales Planungssystem hochzuladen, so dass, wenn alle durch den Pullstream-Randknoten gesandten Pullstream-Abfrageanforderungen empfangen wurden, nachdem der Pullstream-Randknoten eine Ressourcenerwerbsanforderung für eine Ziel-Streamingmedienressourcer von einem Pullstream-Kundenterminal erhalten hat und bestimmt, dass die Ziel-Streamingmedienressource lokal nicht gespeichert ist übereinstimmend mit einem mit der Ressourcenerwerbsanforderung übertragenen Ressourcenbezeichner, die Knoteninformation des Pushstream-Randknotens zum Pullstream-Randknoten vom zentralen Planungssystem zurückgemeldet wird; und
eine Ressourcen-Rückmeldungseinheit, die konfiguriert ist, um nach Empfang der an die Streamingmedienressource gerichteten und durch den Pullstream-Randknoten gesandten Pullstream-Anforderung, direkt die Streamingmedienressource an den Pullstream-Randknoten zurückzumelden, wobei ein optimaler Übertragungsweg zwischen dem Pushstream-Randknoten und dem Pullstream-Randknoten gebildet wird.

9. Eine Methode für die Verteilung einer Streamingmedienressoruce in einem Inhaltsbelieferungsnetzwerk, CDN, die Folgendes umfasst:
Empfang (S31) durch ein zentrales Planungssystem, wenn ein Pushstream-Randknoten eine durch ein Pushstream-Kundenterminal gesandte Pushstream-Anforderung erhält, eine durch den Pushstream-Randkonten hochgeladene Pushstream-Information, wobei die Pushstream-Information einen Ressourcenbezeichner der Streamingmedienressource, an die sich die Pushstreamanforderung richtet, und Konteninformation des Pushstream-Randknotens einschliesst; und
Empfang (S33) durch das zentrale Planungssystem einer Pullstream-Anforderung, die an eine Ziel-Streamingmedienressource gerichtet ist und duch einen Pullstream-Randknoten gesandt wird, nachdem der Pullstream-Randknoten eine Ressourceerwerbsanforderung für eine Ziel-Streamingmedienressource von einem Pullstream-Kundenterminal erhalten hat, und bestimmt wird, dass die Ziel-Streamingmedienressouce lokal nicht gespeichert ist übereinstimmend mit einem Ressourcenbezeichner, der in der Ressourcenerwerbsanforderung enthalten ist, und Rückmeldung eines Abfrageresultats an den Pullstream-Randknoten, wobei das Abfrageresultat einen Ziel-Pushsstream-Randknoten anzeigt, der die Ziel-Streamingmedienressource speichert, und zwischen diesem und dem Pullstream-Randknoten sich ein optimaler Übertragungsweg bildet, so dass der Pullstream-Randknoten direkt die Ziel-Streamingmedienressource von dem durch das Abfrageresultat angegebenen Ziel-Pushstream-Randknoten erhält.

10. Die Methode gemäss Anspruch 9, die weiter Folgendes umfasst:
Empfang und lokale Speicherung durch das zentrale Planungssystem, wenn der Pullstream-Randknoten die Ziel-Streamingmedienressource speichert, eines Ressourcenbezeichners der Ziel-Streamingmedienressource und durch den Pullstream-Randknoten gesandte Knoteninformation des Pullstream-Randknotens.

11. Die Methode gemäss Anspruch 9, bei der die Rückmeldung des Abfrageresultats des zentralen Planungssystems an den Pullstream-Randkonten Folgendes umfasst:
Abfrage durch das zentrale Planungssystem der Pushstream-Randknoten, die allgemein die Ziel-Streamingmedienressourcen speichern, und Bestimmung eines Ziel-Pushstream-Randknotens, der zu dem Pullstream-Randknoten passt, der die Pullstream-Abfrageanforderung aus den basierend auf dem Abfrageresultat festgelegten Pushstream-Randknoten sendet; und
Rückmeldung durch das zentrale Planungssystem der Knoteninformation vom betimmten Ziel-Pushstream-Randknoten zu dem Pullstream-Randknoten, der die Pullstream-Abfrageanforderung sendet.

12. Ein zentrales Planungssystem **dadurch gekennzeichnet, dass** das System eine Empfangseinheit für die Pushstream-Information umfasst, die konfiguriert ist, um nachdem eine Pushstream-Randknoten eine durch ein Pushstream-Kundenterminal gesandte Pushstream-Anforderung (falta verbo) und durch den Pushstream-Randknoten hochgeladene Pushstream-Information empfängt, wobei die Pushstream-Information einen Ressourcenbezeichner einer Streamingmedienressource einschliesst, an die sich die Pushstream-Anforderung richtet, sowie Konteninformation des Pushstream-Randknotens; und
eine Abfrageresultatrückmeldeeinheit, die konfiguriert ist, um eine Pullstream-Abfrageanforderung zu empfangen, die an eine Ziel-Streamingmedienressoruce gerichtet ist und durch einen Pullstream-Randknoten gesandt wird, nachdem der Pullstream-Randknoten eine Ressourcenerwerbsanforderung für eine Ziel-Streamingmedienressoruce von einem Pullstream-Kundenterminal empfängt und festlegt, dass die Ziel-Streamingmedienressource übereinstimmend mit einem in der Ressourcenerwerbsanforderung enthaltenen Ressourcenbezeichener nicht lokal gespeichert ist, und Rückmeldung eines Abfrageresultat an den Pullstream-Randknoten, wobei das Abfrageresultat einen Ziel-Pushstream-Randknoten angibt, der die Ziel-Streamingmedienressource speichert, und zwischen diesem und dem Pullstream-Randknoten ein optimaler Übertragungsweg gebildet wird, so dass der Pullstream-Randknoten direkt die Ziel-Streamingmedienressource von dem durch das Abfrageresultat angegebenen Ziel-Pushstream-Randknoten erhält.

13. Ein System für die Verteilung einer Streamingmedienressource in einem Inhaltsbelieferungsnetzwerk, CDN **dadurch gekennzeichnet, dass** das System einen Pushstream-Randknoten, einen Pullstream-Randknoten, einen Cacheknoten vom Niveau 2, einen Quellknoten und ein zentrales Planungssystem umfasst, wobei:
Der Pushstream-Randknoten und der Quellkonten dieselbe Konfigurationsinformation aufweisen und der Pullstream-Randknoten und der Cache-Knoten vom Niveau 2 dieselbe Konfigurationsinformation aufweisen;
der Pushstream-Randknoten konfiguriert ist, um die Schritte von Anspruch 6 oder 7 auszuführen;
der Pullstream-Randknoten konfiguriert ist, um die Schritte von irgendeinem der Ansprüche 1 bis 4 auszuführen; und
das zentrale Planungsystem konfiguriert ist, um die Schritte von irgendeinem der Ansprüche 9-11 auszuführen.

## Revendications

1. Une méthode de distribution de ressource multimédia de diffusion en streaming dans un réseau de diffusion de contenus (CDN), comprenant les pas suivants:
recevoir (S11), par un nœud périphérique pull-stream, une demande d'acquisition de ressource dirigée à une ressource multimédia cible de diffusion en streaming envoyée par un terminal client pull-stream;
déterminer, par le nœud périphérique pull-stream, si la ressource multimédia cible de diffusion en streaming est stockée localement, conformément à un identificateur de ressource véhiculé par la demande d'acquisition de ressource après avoir reçu celle-ci;
envoyer (S13), par le nœud périphérique pull-stream, une demande d'interrogation pull-stream à un système central de planification, si la ressource multimédia cible de diffusion en streaming n'est pas stockée dans le nœud périphérique pull-stream; et recevoir le résultat d'interrogation remonté par le système central de planification, où le résultat d'interrogation indique un nœud périphérique push-stream cible qui stocke la ressource multimédia cible de diffusion en streaming, et un chemin optimal de transmission est formé entre le nœud périphérique push-stream cible et le nœud périphérique pull-stream; et
obtenir (S15), par le nœud périphérique pull-stream, la ressource multimédia cible de diffusion en streaming du nœud périphérique push-stream cible indiqué par le résultat d'interrogation directement et transférer la ressource multimédia cible de diffusion en streaming obtenue vers le terminal client pull-stream.

2. La méthode conformément à la revendication 1, comprenant en outre les pas suivants:
remonter, si la ressource multimédia cible de diffusion en streaming est stockée dans le nœud périphérique pull-stream, la ressource multimédia cible de diffusion en streaming vers le terminal client pull-stream.

3. La méthode conformément à la revendication 1, où, lorsque le nœud périphérique pull-stream obtient la ressource multimédia cible de diffusion en streaming, la méthode comprend en outre les pas suivants:
stocker localement, par le nœud périphérique pull-stream, la ressource multimédia cible de diffusion en streaming, et remonter l'identificateur de ressource relatif à la ressource multimédia cible de diffusion en streaming et l'information de nœud relative au nœud périphérique pull-stream vers le système central de planification.

4. La méthode conformément à la revendication 1, où la demande d'acquisition de ressource comprend un identificateur de ressource relatif à la ressource multimédia cible de diffusion en streaming; la demande d'interrogation pull-stream comprend l'identificateur de ressource relatif à la ressource multimédia cible de diffusion en streaming et l'information de nœud relative au nœud périphérique pull-stream.

5. Un nœud périphérique pull-stream, **caractérisé en ce qu'**il comprend les éléments suivants:
une unité de réception de demandes d'acquisition de ressources, configurée pour recevoir une demande d'acquisition de ressource dirigée à une ressource multimédia cible de diffusion en streaming et qui est envoyée par un terminal client pull-stream;
un unité d'interrogation, configurée pour envoyer une demande d'interrogation pull-stream au système central de planification, si la ressource multimédia cible de diffusion en streaming n'est pas stockée dans le nœud périphérique pull-stream; et pour recevoir le résultat d'interrogation remonté du système central de planification; où le résultat d'interrogation indique un nœud périphérique push-stream cible qui stocke la ressource multimédia cible de diffusion en streaming, et un chemin de transmission optimal est formé entre le nœud périphérique push-stream cible et le nœud périphérique pull-stream; et
une unité d'acquisition de ressources, configurée pour obtenir directement la ressource multimédia cible de diffusion en streaming du nœud périphérique push-stream cible indiqué par le résultat d'interrogation;
où le nœud périphérique pull-stream est configuré en outre pour déterminer si la ressource multimédia cible de diffusion en streaming est stockée localement, conformément à l'identificateur de ressource véhiculé par la demande d'acquisition de ressource, une fois que l'unité de réception de demandes d'acquisition de ressources reçoit la demande d'acquisition de ressource.

6. Une méthode de distribution de ressource multimédia de diffusion en streaming dans un réseau de diffusion de contenus (CDN), comprenant les pas suivants:
stocker (S21), par un nœud périphérique push-stream, après avoir reçu une demande push-stream envoyée par un terminal client push stream, la ressource multimédia de diffusion en streaming à laquelle s'adresse la demande push-stream; et télécharger un identificateur de ressource relatif à la ressource multimédia de diffusion en streaming et l'information du nœud propre relative au nœud périphérique push-stream sur le système central de planification, après avoir stocké la ressource multimédia de diffusion en streaming, de telle manière que, lorsque la demande d'interrogation pull-stream est reçue d'un nœud périphérique pull-stream, après que celui-ci ait reçu une demande d'acquisition de ressource relative à la ressource multimédia cible de diffusion en streaming d'un terminal client pull-stream, et il est déterminé que la ressource multimédia cible de diffusion en streaming n'est pas stockée localement, conformément à un identificateur de ressource véhiculé par la demande d'acquisition de ressource, le système central de planification remonte l'information de nœud relative au nœud périphérique push-stream vers le nœud périphérique pull-stream, où un chemin de transmission optimal est formé entre le nœud périphérique push-stream et le nœud périphérique pull-stream; et
remonter (S23), par le nœud périphérique push-stream, après avoir reçu la demande pull-stream qui est dirigée vers la ressource multimédia de diffusion en streaming et qui est envoyée par le nœud périphérique pull-stream, la ressource multimédia de diffusion en streaming directement vers le nœud périphérique pull-stream.

7. La méthode conformément à la revendication 6, où le nœud périphérique pull-stream est configuré pour recevoir la demande d'acquisition de ressource envoyée par un terminal client pull-stream, et obtenir l'information de nœud relative au nœud périphérique push-stream correspondant à la demande d'acquisition de ressource du système central de planification.

8. Un nœud périphérique push-stream, **caractérisé en ce qu'**il comprend les éléments suivants:
une unité de téléchargement d'information, configurée pour qu'une fois que le nœud périphérique push-stream ait reçu la demande push-stream envoyée d'un terminal client push stream, stocker la ressource multimédia de diffusion en streaming vers laquelle la demande push-stream a été dirigée, et télécharger l'identificateur de ressource relatif à la ressource multimédia de diffusion en streaming et l'information de nœud relative au nœud périphérique push-stream vers un système central de planification, de telle manière que lorsque la demande d'interrogation pull-stream est reçue d'un nœud périphérique pull-stream, après que celui-ci ait reçu une demande d'acquisition de ressource relative à la ressource multimédia cible de diffusion en streaming d'un terminal client pull-stream, et il est déterminé que la ressource multimédia cible de diffusion en streaming n'est pas stockée localement, conformément à un identificateur de ressource véhiculé par la demande d'acquisition de ressource, le système central de planification remonte l'information de nœud relative au nœud périphérique push-stream vers le nœud périphérique pull-stream; et
une unité de retour de ressources, configurée pour qu'après la réception de la demande pull-stream qui est dirigée vers la ressource multimédia cible de diffusion en streaming et qui est envoyée par le nœud périphérique pull-stream, remonter directement la ressource multimédia cible de diffusion en streaming vers le nœud périphérique pull-stream,
où un chemin de transmission optimal est formé entre le nœud périphérique push-stream et le nœud périphérique pull-stream.

9. Une méthode de distribution de ressource multimédia de diffusion en streaming dans un réseau de diffusion de contenus (CDN), comprenant les pas suivants:
recevoir (S31), par un système central de planification, lorsqu'un nœud périphérique push-stream reçoit une demande push-stream envoyée par un terminal client push-stream, l'information push-stream téléchargée par le nœud périphérique push-stream, ladite information push-stream contenant un identificateur de ressource relatif à la ressource multimédia de diffusion en streaming à laquelle s'adresse la demande push-stream et l'information de nœud relative au nœud périphérique push-stream; et
recevoir (S33), par le système central de planification, une demande d'interrogation pull-stream qui s'adresse à la ressource multimédia cible de diffusion en streaming et qui est envoyée par un nœud périphérique pull-stream après que celui-ci ait reçu une demande d'acquisition de ressource relative à une ressource multimédia cible de diffusion en streaming d'un terminal client pull-stream, et il est déterminé que la ressource multimédia cible de diffusion en streaming n'est pas stockée localement, conformément à un identificateur de ressource véhiculé par la demande d'acquisition de ressource, et remonter le résultat d'interrogation vers le nœud périphérique pull-stream , où le résultat d'interrogation indique un nœud périphérique push-stream cible qui stocke la ressource multimédia cible de diffusion en streaming, et un chemin optimal de transmission est formé entre le nœud périphérique push-stream cible et le nœud périphérique pull-stream, de telle manière que le nœud périphérique pull-stream obtient directement la ressource multimédia cible de diffusion en streaming du nœud périphérique push-stream cible indiqué par le résultat d'interrogation.

10. La méthode conformément à la revendication 9, comprenant en outres les pas suivants:
recevoir et stocker localement, par le système central de planification, lorsque le nœud périphérique pull-stream stocke la ressource multimédia cible de diffusion en streaming, un identificateur de ressource relatif à la ressource multimédia cible de diffusion en streaming et l'information de nœud relative au nœud périphérique pull-stream envoyée par celui-ci.

11. La méthode conformément à la revendication 9, où le retour du résultat d'interrogation par le système central de planification vers le nœud périphérique pull-stream comprend les pas suivants:
interroger, par le système central de planification, les nœuds périphériques push-stream qui stockent actuellement la ressource multimédia cible de diffusion en streaming, et déterminer un nœud périphérique push-stream qui s'apparie au nœud périphérique pull-stream qui envoie la demande d'interrogation pull-stream parmi les nœuds périphériques push-stream déterminés en fonction du résultat d'interrogation; et
remonter, par le système central de planification, l'information de nœud relative au nœud périphérique push-stream vers le nœud périphérique pull-stream qui envoie la demande d'interrogation pull-stream.

12. Un système central de planification, **caractérisé en ce qu'**il comprend les éléments suivants:
une unité de réception d'information push-stream, configurée pour recevoir, une fois que le nœud périphérique push-stream l'ait reçue, la demande push-stream envoyée par un terminal client push stream et l'information push-stream téléchargée par le nœud périphérique push-stream, où l'information push-stream comprend un identificateur de ressource relatif à la ressource multimédia cible de diffusion en streaming à laquelle s'adresse la demande push-stream et l'information de nœud relative au nœud périphérique push-stream; et
une unité de retour du résultat d'interrogation, configurée pour recevoir une demande d'interrogation pull-stream qui s'adresse à la ressource multimédia cible de diffusion en streaming et qui est envoyée par un nœud périphérique pull-stream, une fois que celui-ci reçoit une demande d'acquisition de ressource relative à la ressource multimédia cible de diffusion en streaming d'un terminal client pull-stream, et il est déterminé que la ressource multimédia cible de diffusion en streaming n'est pas stockée localement, conformément à l'identificateur de ressource véhiculé par la demande d'acquisition de ressource et le résultat d'interrogation est remonté vers le nœud périphérique pull-stream, où le résultat d'interrogation indique un nœud périphérique push-stream cible qui stocke la ressource multimédia cible de diffusion en streaming; et un chemin optimal de transmission est formé entre le nœud périphérique push-stream cible et le nœud périphérique pull-stream, de telle manière que le nœud périphérique pull-stream obtienne directement la ressource multimédia cible de diffusion en streaming du nœud périphérique push-stream cible indiqué par le résultat d'interrogation.

13. Un système de distribution de ressource multimédia de diffusion en streaming dans un réseau de diffusion de contenus (CDN), **caractérisé en ce que** le système comprend un nœud périphérique push-stream, un nœud périphérique pull-stream, un nœud cache de niveau 2, un nœud origine et un système central de planification, où:
le nœud périphérique push-stream et le nœud origine ont la même information de configuration, et le nœud périphérique pull-stream et le nœud cache de niveau 2 ont la même information de configuration;
le nœud périphérique push-stream est configuré pour exécuter les pas des revendications 6 ou 7;
le nœud périphérique pull-stream est configuré pour exécuter les pas de l'une quelconque des revendications 1 à 4; et
le système central de planification est configuré pour exécuter las pas de l'une quelconque des revendications 9 à 11.
